# EUROPÄISCHE PATENTSCHRIFT

(11) **EP 1 116 446 B1**
(45) Veröffentlichungstag und Bekanntmachung des Hinweises auf die Patenterteilung: **08.02.2012**
(21) Anmeldenummer: 01109105.5
(22) Anmeldetag: 28.03.1996
(51) Int. Cl.: A23L 3/3463, A23L 3/3472

(54) **Verfahren zur Haltbarkeitsverbesserung und/oder Stabilisierung von mikrobiell verderblichen Produkten**
Method for improving shelf life and / or stability of products which may spoil by the influence of microbes
Procédé d'amélioration de la durée de conservation et / ou de la stabilité des aliments altérables sous l'action de microbes

(30) Priorität: 31.03.1995 DE 19512147
(43) Veröffentlichungstag der Anmeldung: 18.07.2001
(62) Teilanmeldung aus: 96909141.2
(73) Patentinhaber: Schür, Jörg-Peter, 41844 Wegberg-Dahlheim (DE)
(72) Erfinder: Schür, Jörg-Peter, 41844 Wegberg-Dahlheim (DE)
(74) Vertreter: von Kreisler Selting Werner

(56) Entgegenhaltungen:
- EP-A- 0 557 946
- DE-A- 2 423 076
- DE-A- 3 138 277
- GB-A- 172 993
- GB-A- 1 060 447
- US-A- 4 446 161
- DATABASE WPI Section Ch, Week 9411 Derwent Publications Ltd., London, GB; Class D13, AN 94-088588 XP002007733 & JP 06 038678 A (OKUBO T), 15. Februar 1994 (1994-02-15)
- DATABASE WPI Section Ch, Week 9028 Derwent Publications Ltd., London, GB; Class C03, AN 90-213153 XP002007734 & JP 02 142703 A (KURITA WATER IND KK), 31. Mai 1990 (1990-05-31)
- DATABASE WPI Section Ch, Week 8302 Derwent Publications Ltd., London, GB; Class D13, AN 83-03563K XP002007735 & JP 57 194775 A (ASAMA KASEI KK), 30. November 1982 (1982-11-30)
- DATABASE WPI Section Ch, Week 8726 Derwent Publications Ltd., London, GB; Class D13, AN 87-181806 XP002007736 & JP 62 111675 A (SANRAKU OCEAN), 22. Mai 1987 (1987-05-22)

## Beschreibung

Die vorliegende Erfindung betrifft ein Verfahren zur Haltbarkeitsverbesserung und/oder Stabilisierung von mikrobiell verderblichen Produkten, ein Prozeßhilfsmittel zur Durchführung dieses Verfahrens sowie die Verwendung des Prozeßhitfsmittels zum Beaufschlagen von Oberflächen mikrobiell verderblicher Produkte und/oder deren Umgebung.

Industriell bearbeitete Nahrungs- und Futtermittel, Kosmetika, Pharmazeutika und andere für mikrobielle Verderbnis anfällige Produkte müssen eine gewisse, nicht zu kurze Zeit haltbar sein, um nach einem Transport und Vertrieb über die üblichen Wege unverdorben den Verbraucher zu erreichen. Der Verbraucher erwartet darüber hinaus, daß das erworbene Produkt auch nach dem Kauf nicht sofort verdirbt, sondern, je nach Produkt, einige Tage oder Wochen auf Vorrat gehalten werden kann.

Unbehandelt würden die meisten Nahrungs- und Futtermittel innerhalb weniger Tage verderben, da sich Pilze und/oder Bakterien ungehindert, allenfalls durch Kühlung beeinträchtigt, auf einem für sie idealen Nährboden vermehren könnten. Typische Beispiele sind der Verderb von Brot durch Schimmelpilze, z.B. Aspergillus niger, von Fleischprodukten (z.B. Wurst) durch Enterobakterien oder Lactobacillen, die Kontamination von Geflügel durch Salmonellen und vieles andere mehr. Da Pilze einschließlich Hefen bzw. deren Sporen, Grampositive und Gramnegative Bakterien überall vorhanden sind, wo nicht durch besondere, kostspielige und industriell aus ökonomischen Erwägungen nicht anwendbare Maßnahmen ein steriles Umfeld geschaffen wird, müssen geeignete Gegenmaßnahmen getroffen werden.

Herkömmlicherweise werden daher Nahrungs- und Futtermittel, Kosmetika, Pharmazeutika, Farben, Papier und Zellstoffe und andere verderbliche Produkte mit Konservierungsmitteln haltbar gemacht, die laut der Codex Alimentarius Liste der Food und Agriculture Organisation (FAO/WHO Food Standard Programme) in Division 3 Food Additives Preservatives 3.73 als "synthetische Konservierungsmittel" aufgeführt und meist in Form von chemischen Monosubstanzen oder deren Kombinationen eingesetzt werden.

Die in der erwähnten Liste aufgeführten Konservierungsmittel sind bakteriostatisch und/oder fungistatisch wirksam und verbessern die Haltbarkeit wesentlich. Sie werden jedoch von vielen Verbrauchern abgelehnt, da ihre Auswirkungen auf die Gesundheit des Verbrauchers nicht bekannt sind, bzw. schädliche Einflüsse, insbesondere bei wiederholter Aufnahme über einen langen Zeitraum, nicht ausgeschlossen werden können.

Nachteilig bei diesen Konservierungsmitteln ist insbesondere, daß sie regelmäßig dem Nahrungsmittel zugegeben werden. Dadurch gelangen relativ hohe Konzentrationen dieser Mittel beim Verzehr auch in den menschlichen Körper. Die Folge sind die heute vielfach gehäuft auftretenden Reaktionen in Form allergischer Erkrankungen.

Eine Alternative zur Konservierung durch Zusatz von synthetischen Konservierungsmitteln ist die thermische Inaktivierung von Keimen, z.B. durch Pasteurisieren. Unter Pasteurisieren versteht man eine thermische Behandlung von 30 bis 120 Minuten Einwirkzeit bei 70 bis 85 °C.

Die Pasteurisierung verbessert die Haltbarkeit derart behandelter Produkte erheblich, ist jedoch technisch aufwendig und verbraucht sehr viel Energie. Die Lebensfähigkeit von Sporen wird darüber hinaus oft nicht oder nur sehr unvollständig beeinträchtigt. Eine Pasteurisierung ist außerdem für temperaturempfindliche Produkte nicht anwendbar oder führt zu einem nicht unerheblichen Qualitätsverlust, da spätestens durch das oftmals notwendige zweite Thermisieren (bis zu 85 °C) der "Frischegrad" des pasteurisierten Produktes nachläßt. Außerdem sind gerade wertvolle Bestandteile von Nahrungsmitteln, Kosmetika oder Pharmazeutika, z.B. Vitamine, Aminosäuren und viele pharmazeutische Wirkstoffe, thermolabil, so daß sich eine thermische Behandlung unter den üblichen Pasteurisierungsbedingungen verbietet.

Eine weitere Möglichkeit zur Verbesserung der Haltbarkeit ist es, das von Verderbnis bedrohte Produkt unter Stickstoff oder CO₂ luftdicht zu verpacken oder in Vakuumverpackungen bereitzustellen, wie es z.B. bei gemahlenem Kaffee gehandhabt wird. Diese Verfahren sind jedoch teuer und aufwendig und daher für viele Nahrungsmittel nicht anwendbar.

Aufgabe der Erfindung ist es daher, ein Verfahren zur Haltbarkeitsverbesserung und/oder Stabilisierung von mikrobiell verderblichen Produkten, bei dem während des Prozesses zur Herstellung, Verarbeitung oder Verpackung der Produkte deren Oberflächen und/oder deren Umgebung, insbesondere die Umgebungsluft und/oder die Oberflächen der unmittelbar oder mittelbar mit den Produkten in Kontakt kommenden Geräte oder sonstigen Materialien mit einem oder mehreren Prozeßhilfsmitteln bereitzustellen. Hierdurch soll insbesondere die Haltbarkeitsverbesserung und Stabilisierung von Nahrungs- und Futtermitteln, Kosmetika, Pharmazeutika und anderen, von Verderbnis bedrohten Produkten ermöglicht werden, ohne daß synthetische Konservierungsmittel in diese behandelten Stoffe eingemischt oder eine Pasteurisierung bei Temperaturen von 70 bis 85 °C angewendet werden muß. Ebenso soll eine Herabminderung der eingesetzten Mittel zur Haltbarkeitsverbesserung und Stabilisierung erreicht werden.

Erfindungsgemäß wird diese Aufgabe durch ein Prozeßhilfsmittel, welches wenigstens einen mikrobizid wirkenden Aromastoff, vorzugsweise mindestens zwei Aromastoffe, enthält.

Die vorliegende Erfindung betrifft ferner ein Prozeßhilfsmittel, das dadurch gekennzeichnet ist, daß es wenigstens einen mirkobizid wirkenden Aromastoff, vorzugsweise mindestens zwei Aromastoffe enthält

Schließlich betrifft die vorliegende Erfindung auch die Verwendung des Prozeßhilfsmittels zum Beaufschlagen von Oberflächen mikrobiell verderblicher Produkte und/oder deren Umgebung zum Zwecke des Aufstreichens, Schmierens, Emulgierens, Trennens, Reinigens, Sprühens, Vemebelns, Vergasens und Schneidens.

Die in den erfindungsgemäßen Prozeßhilfsmitteln enthaltenen Aromastoffe sind ausschließlich natürliche oder naturidentische Aromastoffe, die gemäß FEMA als sicher (GRAS - Generally Recognized As Safe) anerkannt sind. Bei der erwähnten Liste handelt es sich um FEMA GRAS Flavour Substances Lists GRAS 3-16 Nr. 2001-3834 (Stand 1993), die natürliche und naturidentische Aromastoffe aufführt, die von der amerikanischen Gesundheitsbehörde FDA zur Verwendung in Nahrungsmitteln zugelassen sind (FDA Regulation 21 CFR 172.515 für naturidentische Aromastoffe (Synthetic Flavoring Substances und Adjuvants) und FDA Regulation 21 CFR 182.20 für natürliche Aromastoffe (Natural Flavoring Substances und Adjuvants). Die diese FDA-Normen erfüllenden Aromastoffe dürfen "quantum satis" eingesetzt werden, d.h. sie dürfen bis zu der Höchstkonzentration im Nahrungsmittel enthalten sein, in der sie noch keine geruchliche oder geschmackliche Beeinträchtigung des Nahrungsmittels, dem sie zugesetzt werden, bewirken. Die gemäß FEMA aufgeführten Aromastoffe decken sich weitgehend mit den in der entsprechenden europäischen Norm COE enthaltenen Stoffen.

Erfindungsgemäß dürfen außerdem die gemäß Artikel V European Community Directive Flavourings (22.06.88) als "NAT4" klassifizierten Aromastoffe verwendet werden, vorausgesetzt, sie gelten gemäß der zuvor erwähnten FEMA GRAS-Liste als sicher. NAT4-Substanzen sind Substanzen, die unter bestimmten Voraussetzungen als naturidentisch zu deklarieren sind, z.B., wenn diese Substanzen in Verbindung und als Bestandteil mit einem natürlichen oder naturidentischen Aromastoff eingesetzt werden.

Der besondere Vorteil der erfindungsgemäßen Prozeßhilfsmittel ist, daß es aufgrund seiner in der FEMA GRAS-Liste aufgeführten und von der US-Gesundheitsbehörde FDA, der wohl kritischsten Gesundheitsbehörde überhaupt, als unbedenklich anerkannten Bestandteile im "quantum satis"-Konzentrationsbereich ohne weiteres Nahrungsmitteln zugesetzt werden kann.

Ein weiterer besonderer Vorteil liegt darin, daß die Prozeßhilfsmittel den Geschmack und Geruch der behandelten Produkte nicht beeinflussen.

Die erfindungsgemäßen Prozeßhilfsmittel werden beispielsweise in Form von Schmiermitteln, Emulgier- und Reinigungsmitteln, Sprühmitteln, Vemebelungsmitteln, gasphasenaktiven Mitteln, Wärmeübertragungsmitteln sowie Schneid- oder Trennmitteln eingesetzt. Ebenso können die Prozeßhilfsmittel als Zusätze zu den genannten Mitteln eingesetzt werden.

Es ist erfindungswesentlich, daß die Prozeßhilfsmittel nicht den Nahrungsmitteln beigegeben werden bzw. mit diesen vermischt werden. Vielmehr werden nur die Oberflächen bzw. Schnittflächen der Nahrungsmittel mit den Prozeßhilfsmitteln beaufschlagt. Dies kann dadurch geschehen, daß die Nahrungsmitteloberflächen bzw. Schnittflächen direkt mit den Prozeßhilfsmitteln beaufschlagt werden. Ebenso ist es aber auch möglich, die Oberflächen von Geräten, Produktionsmaschinen, Verpackungseinrichtungen, Transporteinrichtungen, Verpackungsmaterialien sowie die Umgebungsluft mit dem Prozeßhilfsmittel zu versetzen.

Es ist erfindungsgemäß überraschend, daß die mikrobizide Wirkung der Prozeßhilfsmittel bereits bei Anwendung geringer Konzentrationen auftritt. Nur 0,01 bis 5 g/kg, vorzugsweise 0,05 bis 1 g/kg Nahrungsmittel wird bei deren Beaufschlagung verwendet. Bei dem Einsatz für die Umgebungsluft werden nur 0,001 bis 10 g/m³ Luft beispielsweise eingesetzt. Für die Oberflächen von Geräten werden sogar nur 0,000001g bis 0,1 g/cm² Oberfläche verwendet.

Bei Einhaltung dieser Konzentrationen liegen die in den Nahrungsmitteln nachweisbaren Mengen nur bei 0,001 Gew.-%. Hingegen werden nach dem Stand der Technik regelmäßig 0,1 bis 3 Gew.-% Konservierungsstoff in den Nahrungsmitteln vorhanden sein. Trotz dieser äußerst geringen Konzentrationen ist es erfindungsgemäß überraschend, daß gegenüber herkömmlich konservierten Nahrungsmitteln eine Haltbarkeitsverlängerung von bis zu 50 % erzielt werden kann.

Es ist besonders hervorzuheben und erstaunlich, daß bereits durch Prozeßhilfsmittel die indirekt auf Nahrungsmittel aufgebracht werden, bereits 0,001 Gew.-% ausreichen, um eine Haltbarkeitsstabilisierung bzw. -verbesserung bei erhöhter Produktqualität zu erreichen.

Diese Wirkung ist um so überraschender, als die mikrobizide Wirkungszeit der erfindungsgemäß eingesetzten Aromastoffe unter 24 Stunden, vorzugsweise unter 12 Stunden liegt. Ganz besonders bevorzugt ist es, Prozeßhilfsmittel und Konzentrationen so auszuwählen, daß die mikrobizide Wirkungszeit unter 1 Stunde, vorzugsweise unter 15 Minuten liegt.

Im Gegensatz dazu ist es das Ziel der herkömmlichen Konservierungsstoffe, möglichst lange, d.h. über Wochen und Monate, in dem Lebensmittel wirksam zu sein. Trotz der sehr kurzen Wirkungszeiten der erfindungsgemäß eingesetzten Prozeßhilfsmittel ist die Haltbarkeit gegenüber den nach dem Stand der Technik mit herkömmlichen Konservierungsstoffen bzw. Konservierungsverfahren behandelten Lebensmitteln signifikant erhöht.

Das erfindungsgemäße Prozeßhilfsmittel werden im Anspruchssatz genannt.

Bevorzugte Ausführungsformen der erfindungsgemäßen Prozeßhilfsmittel umfassen ein oder mehrere Aromastoffe, die aus einer oder mehreren der folgenden Gruppen ausgewählt sind:

### I. Alkohole

Acetoin (Acetylmethylcarbinol), Ethylalkohol (Ethanol), Propylalkohol (1-Propanol, iso-Propylalkohol (2-Propanol, Isopropanol), Propylenglykol, Glycerin,
Benzylalkohol, n-Butylalkohol (n-Propylcarbinol), iso-Butylalkohol (2-Methyl-1-propanol), Hexylalkohol (Hexanol), L-Menthol, Octylalkohol (n-Octanol), Phenylethylalkohol (2-Phenylethanol), Zimtalkohol (3-Phenyl-2-propen-1-01), α-Methylbenzylalkohol (1-Phenylethanol), Heptylalkohol (Heptanol),
n-Amylalkohol (1-Pentanol), iso-Amylalkohol (3-Methyl-1-butanol), Anisalkohol (4-Methoxybenzylalkohol, p-Anisalkohol), Citronellol, n-Decylalkohol (n-Decanol), Geraniol, β-γ-Hexenol (3-Hexenol), Hydrozimtalkohol (3-Phenyl-1-propanol). Laurylalkohol (Dodecanol), Linalool, Nerolidol, Nonadienol (2,6-Nonadien-1-01), Nonylalkohol (Nonanol-1), Rhodinol, Terpineol, Borneol, Clineol (Eucalyptol), Anisol, Cuminylalkohol (Cuminol), 1-Phenyl-1-propanol, 10-Undecen-1-01, 1-Hexadecanol.

### II. Aldehyde

Acetaldehyd, Anisaldehyd, Benzaldehyd, iso-Butylaldehyd (Methyl-1-propanal), Citral, Citronellal, n-Caprinaldehyd (n-Decanal), Ethylvanillin, Fufurol, Heliotropin (Piperonal), Heptylaldehyd (Heptanal), Hexylaldehyd (Hexanal), 2-Hexenal (β-Propylacrolein), Hydrozimtaldehyd (3-Phenyl-1-propanal), Laurylaldehyd (Dodecanal), Nonylaldehyd (n-Nonanal), Octylaldehyd (n-Octanal), Phenylacetaldehyd (1-Oxo-2-phenylethan), Propionaldehyd (Propanal), Vanillin, Zimtaldehyd (3-Phenylpropenal), Perillaaldehyd, Cuminaldehyd.

### III. Phenole

Thymol, Methyleugenol, Acetyleugenol, Safrol, Eugenol, Isoeugenol, Anethol, Phenol, Methylchavicol (Estragol; 3-4-Methoxyphenyl-1-propen), Carvacrol, α-Bisabolol, Fomesol, Anisol (Methoxybenzol), Propenylguaethol (5-Prophenyl-2-ethoxyphenol).

### IV. Acetate

iso-Amylacetat (3-Methyl-1-butylacetat), Benzylacetat, Benzylphenylacetat, n-Butylacetat, Cinnamylacetat (3-Phenylpropenylacetat), Citronellylacetat, Ethylacetat (Essigester), Eugenolacetat (Acetyleugenol), Geranylacetat, Hexylacetat (Hexanylethanoat), Hydrocinnamylacetat (3-Phenyl-propylacetat), Linalylacetat, Octylacetat, Phenylethylacetat, Terpinylacetat, Triacetin (Glyceryltriacetat), Kaliumacetat, Natriumacetat, Natriumdiacetat, Calciumacetat.

### V. Säuren und/oder deren physiologisch verträgliche Salze

Essigsäure, Aconitsäure, Adipinsäure, Ameisensäure, Apfelsäure (1-Hydroxybemsteinsäure), Capronsäure, Hydrozimtsäure (3-Phenyl-1-propionsäure), Pelagonsäure (Nonansäure), Milchsäure (2-Hydroxypropionsäure), Phenoxyessigsäure (Glykolsäurephenylether), Phenylessigsäure (α-Toluolsäure), Valeriansäure (Pentansäure), iso-Valeriansäure (3-Methylbutansäure), Zimtsäure (3-Phenylpropensäure), Citronensäure, Mandelsäure (Hydroxyphenylessigsäure) Weinsäure (2,3-Dihydroxybutandisäure; 2,3-Dihydroxybernsteinsäure), Fumarsäure, Tanninsäure.

### VI. Ester

Allicin.

### VII. Terpene

Campher, Limonen, β-Caryophyllen.

### VIII. Acetale

Acetal, Acetaldehydibutylacetal, Acetaldehyddipropylacetal, Acetaldehydphenethylpropylacetal, Zimtaldehydethylenglycolacetal, Decanaldimethylacetal, Heptanaldimethylacetal, Heptanalglycerylacetal, Benzaldehydpropylenglykolacetal.

### IX. Polyphenol

X. Etherische Öle und/oder alkoholische, glykolische oder durch CO₂ -Hochdruckverfahren erhaltene Extrakte aus den im folgenden aufgeführten Pflanzen:
a) Öle bzw. Extrakte mit hohem Anteil an Alkoholen:
   Melisse, Koriander, Kardamon, Eukalyptus;
b) Öle bzw. Extrakte mit hohem Anteil an Aldehyden:
   Eukalyptus citriodora, Zimt, Zitrone, Lemongras, Melisse, Citronella, Limette, Orange;
c) Öle bzw. Extrakte mit hohem Anteil an Phenolen:
   Oreganum, Thymian, Rosmarin, Orange, Nelke, Fenchel, Campher, Mandarine, Anis, Cascarille, Estragon und Piment;
d) Öle bzw. Extrakte mit hohem Anteil an Acetaten:
   Lavendel;
e) Öle bzw. Ektrakte mit hohem Anteil an Estern:
   Senf, Zwiebel, Knoblauch;
f) Öle bzw. Extrakte mit hohem Anteil an Terpenen:
   Pfeffer, Pomeranze, Kümmel, Dill, Zitrone, Pfefferminz, Muskatnuß.

Sofern das Prozeßhilfsmittel nur einen der genannten Aromastoffe enthält, kommen Isopropanol und Ethanol nicht zum Einsatz. Überraschenderweise hat sich gezeigt, daß eine Kombination von mindestens zwei der angegebenen Aromastoffe eine weitaus größere Wirkung aufweist, als bei einer Einzelsubstanz.

Die meisten der in der GRAS FEMA-Uste aufgeführten Aromastoffe sind nicht wasserlöslich, d.h. hydrophob. Werden sie in hauptsächlich fetthaltigen Nahrungsmitteln eingesetzt, so sind sie aufgrund ihres lipophilen Charakters direkt ohne Lösungsmittel verwendbar. Der Anteil lipophiler Nahrungsmittel ist jedoch relativ gering. Um in den meistens hydrophilen Nahrungs- oder Futtermitteln, Kosmetika oder Pharmazeutika ihre Wirkung entfalten zu können, werden sie bevorzugt in Verbindung mit einem wasserlöslichen Lösungsvermittler eingesetzt Um dem Anspruch dieser Erfindung, gesundheitlich unbedenkliche Prozeßhilfsmittel zur Verfügung zu stellen, gerecht zu werden, werden ausschließfich für Nahrungsmittel zugelassene Lösungsvermittler-Aromastoffe, z.B. Alkohole verwendet.

Die Anwendung der Prozeßhilfsmittel erfolgt unverdünnt und/oder in wasserlöslichen Verdünnungen mit Wasser und/oder lebensmittelzulässigen Lösemitteln (z.B. Alkohole) und/oder in fettlöslichen Verdünnungen mit Pflanzen- (Fett)Ölen.

In den erfindungsgemäßen Prozeßhilfsmitteln können z.B. gut wasserlösliche Alkohole, bevorzugt in Konzentrationen von 0,1 bis 99 Gew.-%, bezogen auf das Prozeßhilfsmittel, in Verbindung mit anderen Aromastoffen eingesetzt werden. Die erfindungsgemäßen Prozeßhilfsmittel enthalten vorzugsweise weniger als 50 Gew.-% Ethanol, Isopropanol oder Benzylalkohol oder eines Gemisches dieser Stoffe. Besonders bevorzugt ist es, wenn der Anteil der genannten Alkohole bei weniger als 30 Gew.-%, insbesondere weniger als 20 Gew.-% liegt. Sofern Prozeßhilfsmittel eingesetzt werden, die Benzylalkohol und wenigstens einen weiteren Aromastoff enthalten, kann der Anteil an Benzylalkohol auch bei mehr als 50 Gew.-% liegen. Überraschenderweise haben die Prozeßhilfsmittel, die beispielsweise nur 20 Gew.-% Ethanol oder Isopropanol in Verbindung mit Aromaaldehyden und -phenolen in Konzentrationen im Promillbereich enthalten, eine sehr stark fungizide und bakterizide Wirkung; sogar Prozeßhilfsmittel, die 1 Gew.-% der genannten wasserlöslichen Alkohole in Verbindung mit weniger als 3 %o Aromaaldehyd und -phenol enthalten, weisen eine 70 bis 100 %-ige mikrobizide Wirkung auf.

Aus dem Voranstehenden ergibt sich, daß die erfindungsgemäßen Prozeßhilfsmittel überraschende mikrobizide Wirkungen auf das Umfeld der Produktion bzw. des Produktionsprozesses haben.

Bevorzugt ist dabei eine Verwendung der Prozeßhilfsmittel für die Produktion in Nahrungs- und Futtermitteln, Kosmetika, Pharmazeutika, Farben, Papier und/oder Zellstoffen.

In besonders bevorzugten Ausführungsformen werden die Prozeßhilfsmittel zur Haltbarkeitsverbesserung und Stabilisierung von aus der folgenden Gruppe ausgewählten Nahrungsmitteln verwendet:

Brot, Backwaren, Backmitteln, Backpulver, Puddingpulver, Getränken, diätetischen Lebensmitteln, Essenzen, Feinkost, Fisch und Fischprodukten, Kartoffeln und Produkten auf Kartoffelgrundlage, Gewürzen, Mehl, Margarine, Obst und Gemüse und Produkten auf Grundlage von Obst und Gemüse, Sauerkonserven, Stärkeprodukten, Süßwaren, Suppen, Teigwaren, Fleisch- und Fleischwaren, Milch-, Molkerei- und Käseprodukten, Geflügel und Geflügelprodukten, Ölen, Fetten und öl- oder fetthaltigen Produkten.

Das erfindungsgemäße Prozeßhilfsmittel wirkt im Umfeld des für Verderbnis anfälligen Produktes, beispielsweise eines Nahrungs- oder Futtermittels, z.B. auf Maschinenteilen, die in Kontakt mit dem zu be- oder verarbeitenden Produkt stehen, oder in der Luft. Durch den direkten Kontakt mit der Oberfläche des für Verderbnis anfälligen Produktes wirken sie auch dort, d.h. sie entfalten ihre Wirkung auf der Oberfläche oder bei Eindringen in das Produkt in diesem selbst.

Der besondere Vorteil des erfindungsgemäßen Prozeßhilfsmittels ist daher, daß es einerseits zuverlässig dekontaminiert, wobei sich seine Wirksamkeit gegen Gram-positive und Gram-negative Bakterien, Pilze einschließlich Hefen und auch Viren erwiesen hat, während es andererseits für den Konsumenten des Nahrungsmittels keine Gefahr darstellt, da es für diesen vollkommen unschädlich ist und keinerlei mikrobizide, technologische Nachwirkung im Nahrungsmittel besitzt, denn die mikrobizide Wirksamkeit bezieht sich auf das Produktionsumfeld, das durch die erfindungsgemäßen Maßnahmen von kontaminierenden Mikroorganismen befreit

Das erfindungsgemäße Prozeßhilfsmittel kann ein Schmiermittel sein, das gleichzeitig der Schmierung, der Dekontamination der geschmierten Teile und damit indirekt der Haltbarkeitsstabilisierung der Produkte, die mit diesen Teilen in Kontakt stehen, dient.

Erfindungsgemäß kann das Prozeßhilfsmittel weiterhin ein Emulgier-, Trenn- oder Reinigungsmittel sein. Solche Mittel dienen der Emulgierung und/oder Reinigung und damit auch der Dekontamination von Flächen, Gegenständen, Maschinen, Einrichtungen, Geräten, Schneidflächen oder -vorrichtungen, Transportvorrichtungen und ähnlichem. Es kann außerdem zum Dekontaminieren und Reinigen von Nahrungsmitteln, Rohstoffen, Kosmetika, Pharmazeutika, Farben, Papier, Zellstoff, Vieh, Geflügel, Fisch und Abfällen verwendet werden.

Das erfindungsgemäße Prozeßhilfsmittel kann darüber hinaus ein Sprühmittel sein. Ein solches Sprühmittel ermöglicht eine Feinverteilung der dekontaminierenden Wirkstoffe auf allen Maschinenteilen, Transportvorrichtungen, Schneidvorrichtungen, Arbeitsflächen usw. und kann gleichzeitig dazu führen, daß unmittelbar nach dem Schneid- bzw. Trennvorgang und/oder Verpackungs-Portionierungsvorgang verpackte Lebensmittel durch eingeschlossenes Sprühmittel in einem Klima mit dekontaminierenden und/oder haltbarkeitsstabilisierenden Eigenschaften aufbewahrt werden. Vemebel- bzw. versprühbare Ausführungsformen sind darüber hinaus wegen des vergleichsweise geringeren Bedarfs sehr kostengünstig.

Ebenso kann das Sprühmittel in und/oder auf Verpackungen, wie z.B. Tüten, Kartons oder ähnliches eingeblasen bzw. versprüht/vemebelt werden, um so das darin verpackte Produkt länger haltbar zu machen.

Die Sprühmittel dienen auch dazu, im Umfeld der Produktion (Umwelt, Kühlung, Lüftung, Frischluft) an hygienischen Schwachstellen (z.B. Kühlstrecken) vernebelt werden zu können, um somit die Keimzahl zu veningem, ohne daß das dort arbeitende Personal Schaden nimmt.

Ebenso können die Prozeßhilfsmittel zum Aufsprühen auf Nahrungsmittelflächen oder Schnittflächen eingesetzt werden, um die auf den Nahrungsmitteln befindlichen Verderbniserreger zu eliminieren oder zu reduzieren.

Ferner können diese Sprühmitel in Transporteinrichtungen, Lager und Kühlräumen und ähnlichem eingesetzt werden.

In einer weiteren Ausführungsform ist das erfindungsgemäße Prozeßhilfsmittel ein Gasphasen-aktives Mittel, das der aktiven Dekontaminierung und/oder Desodorierung in der Gasphase in mehr oder weniger geschlossenen Systemen, wie Verpackungen, Abfallsystemen, Containersystemen, Transport- oder Lagerräumen und ähnlichem dient. Von der Wirkung des Gasphasenmittels profitieren sowohl das verpackte, im Container enthaltene, transportierte bzw. gelagerte Gut als auch die Luft und das jeweilige Umfeld.

Das erfindungsgemäße Prozeßhilfsmittel hat sich außerdem als ein gutes Wärmeübertragungsmittel erwiesen. Mit Wärmeübertragungsmittel sind Kühl-, Heiz- und Wärmemittel gemeint, die in umlaufenden Kreislaufsystemen von flüssigen Kühl-, Heiz- und Wärmesystemen als dekontaminierende Zusätze verwendet werden können. Sie werden dabei wäßrigen oder öligen Systemen zur Verhinderung eines Wachstums von Mikroorganismen in den Flüssigkeiten zugefügt, um z.B. bei Leckagen von Kühlungen eine Kontamination zu verhindern.

In einer besonders bevorzugten Ausführungsform ist das erfindungsgemäße Prozeßhilfsmittel ein Schneid- oder Trennmittel für Schneidmesser und/oder Schneidvorrichtungen aller Art und für alle verderblichen zu schneidenden Produkte, um die Kontaminierung der Schnittstellen zu verhindern.

In der Nahrungsmittelindustrie treten oft an den Schnitt- bzw. Trennstellen von Nahrungsmitteln Kontaminationen durch Gram-negative oder Gram-positive Erreger, Schimmelpilze, Hefen und andere mögliche Verderbniserreger auf, die die Haltbarkeit der geschnittenen bzw. getrennten Produkte z.T. erheblich beeinträchtigen können und damit sowohl gesundheitliche als auch ökonomische Schäden verursachen. Die Kontaminationen werden durch Rohstoffe, Produkt/Rohstoffreste, Personal durch Maschinenteile oder betriebsbedingte Prozesse oder durch die Luft eingetragen.

Herkömmlicherweise werden daher bis heute entweder die geschnittenen bzw. getrennten oder zu schneidenden bzw. zu trennenden Nahrungsmittel pasteurisiert bzw. technisch behandelt, um sie zu dekontaminieren und damit haltbarer zu machen, oder mit Konservierungsstoffen versetzt. Wie oben bereits erwähnt, ist jedoch eine thermische Behandlung nicht in jedem Fall möglich oder zulässig und führt unter Umständen zu einer Verminderung der Qualität des Produktes.

Eine flankierende Maßnahme zur Verbesserung der Haltbarkeit von Nahrungsmitteln ist die Reinigung oder gar Desinfektion des Umfeldes mit chemischen Desinfektionsmitteln, die der Biozidregelung unterliegt. Diese Stoffe sind mehr oder weniger giftig und sollen nicht in Nahrungsmittel übertragen werden. Die chemische Desinfektion ist jedoch eine diskontinuierliche Maßnahme, die pragmatisch nur zu bestimmten Produktionszeiten an Maschinenteilen und im Umfeld eingesetzt werden kann und nach deren Durchführung ein Nachspülen mit Wasser zur Entfernung der Restsubstanzen erforderlich ist.

Dementsprechend ist die direkte permanente Elimination von Verderbniserregern nicht gewährleistet

Im Stand der Technik ist daher versucht worden, die Maschinenhygiene durch bessere Reinigungsfähigkeit oder durch Installationen zur Erzeugung bzw. Erhaltung von reiner oder keimarmer bzw. keimfreier Luft zu optimieren. Erfahrungsgemäß hat dies jedoch nicht eine erhöhte Haltbarkeit von geschnittenen bzw. getrennten Nahrungsmitteln bewirkt oder ist ökonomisch nicht mehr vertretbar oder ist praktisch nicht sicher umzusetzen.

Ein Beispiel aus der Schnittbrotindustrie zeigt, daß durch das Schneiden bzw. Trennen von Brotsorten wie Ganzteig-, Vollkorn-, Weiß-, Misch- oder Toastbrot und anschließendes Verpacken die Haltbarkeit des Schnittbrotes im Gegensatz zu Ganzbrot erheblich reduziert wird. Sie liegt je nach Brotsorte zwischen 2 und 5 Tagen. Durch die heute meistens durchgeführte anschließende thermische Behandlung (Pasteurisieren in Öfen oder Mikrowellengeräten bei einer Kerntemperatur von 60 bis 90 °C) verlängert sich die Haltbarkeit von Brot normalerweise auf 4 bis ca. 20 Tage bei Verwendung normaler dampfdurchlässiger Polyethylentütenverpackungen. Andere Folien, z.B. aus Polypropylen, die jedoch wesentlich teurer sind, können wegen ihrer geringeren Dampfdurchlässigkeit eine längere Haltbarkeit erreichen. Verpackungen mit Polyesterkunststoffen und einer eingegebenen stickstoffhaltigen Atmosphäre führen zu noch längerer Haltbarkeit. All diese Maßnahmen sind jedoch entweder sehr kostspielig oder nur für teure Spezialprodukte und -märkte einsetzbar und führen z.T. zu erheblichen Qualitätsverlusten des Schnittbrotes, z.B. durch Kondensatbildung in der Brottüte, zu weiche Brotkonsistenz oder zu frühes Austrocknen. Diese Maßnahmen lösen alle nicht die eigentlichen Ursachen der Kontamination durch den Schneid- bzw. Trennprozeß, der sowohl die im Umfeld, wie auch die in Produkt oder an der Maschine vorhandenen möglichen Verderbniserreger durch die Schneidvorrichtung, z.B. die Schneidblätter, in das Nahrungsmittel einträgt bzw. darin verteilt.

Als Schneid- bzw. Trennhilfsmittel werden üblicherweise entweder mineralische Zusammensetzungen, die in vielen Ländern nicht mehr zugelassen sind, oder pflanzliche Schneidöle eingesetzt, die oft bereits schon in sich kontaminiert, d.h. bakteriell belastet sind. Siehe z.B. G. Schuster. Investigations on mould contamination of sliced bread, Bäcker & Konditor 27(11), S. 345-347; G. Spicher. Die Quellen der direkten Kontamination des Brotes mit Schimmelpilzen; Das Schneidöl als Faktor der Schimmelkontamination; Getreide, Mehl und Brot 32(4), S. 91-94.

Für ein Schneid- bzw. Trennmittel, das eine Dekontamination der mit dem Nahrungsmittel in Kontakt stehenden Maschinenteile während des Schneidprozesses erlaubt und dadurch eine verbesserte Haltbarkeit des Schnittgutes bewirkt, besteht daher ein dringender Bedarf, der durch das erfindungsgemäße Schneid- bzw. Trennmittel befriedigt wird.

Das erfindungsgemäße Schneid- oder Trennmittel ist überall einsetzbar, wo industriell geschnitten oder getrennt wird und das Schnittgut einer Verderbnis durch Bakterien oder Pilze oder Kontamination durch Viren unterliegen kann. Dies trifft z.B. für Zellstoffe und Papier zu, besonders aber für Nahrungs- oder Futtermittel.

In einer bevorzugten Ausführungsform ist das erfindungsgemäße Prozeßhilfsmittel zum Schneiden oder Trennen von Brot, Backwaren, Fisch und Fischprodukten, Kartoffeln und Produkten auf Kartoffelgrundlage, Obst und Gemüse und Produkten auf Grundlage von Obst und Gemüse, Süßwaren, Stärkeprodukten, Teigwaren, Fleisch- und Fleischwaren, Käseprodukten, Geflügel und Geflügelprodukten geeignet.

Handelt es sich bei dem erfindungsgemäßen Prozeßhilfsmittel um ein Schneid- bzw. Trennmittel (z.B. zum Schneiden von Brot), so kann dieses auf üblicher Pflanzenöl-Fett-Wachsbasis unter Zusatz von mikrobiziden Prozeßhilfsmitteln auf der Basis von Aromastoffen bereitgestellt werden. Das Schneid- bzw. Trennmittel (z.B. für die Anwendung in der Fleischwaren-Industrie) kann vorzugsweise erfindungsgemäß ausschließlich aus einem oder mehreren Aromastoffen bestehen.

Den Pflanzenölen, -wachsen und -fetten können auch natürliche Emulgatoren, z.B. Lecithine in einer Konzentration von 1 bis 25 Gew.-%, beigegeben werden, wie es dem Stand der Technik entspricht. Beispielhafte Emulgatoren sind Lecithine, Zitronensäuremonoglyceride, Diacetylweinsäure, N-Acetylphosphatidylethanolamin, Phosphatidylinositol, Phosphatidylserin, Phosphatidsäuren, Phosptatidylcholin. Wird das erfindungsgemäße Schneid- bzw. Trennmittel jedoch als Emulsion auf wäßriger Basis bereitgestellt, werden Pflanzenöle, Pflanzenfette und Pflanzenwachse mit ungesättigten und gesättigten C₁₆ - C₁₈-Fettsäuren, die ebenfalls eine Viskosität von ca. 10 mPas (20 °C) bis ca. 500 mPas (20 °C) haben, verwendet.

Das beispielsweise aus den oben erwähnten Fettsäuren bzw. Ölen und Emulgatoren zusammengesetzte Schneid- und Trennmittel kann nach Mischen mit Wasser im Verhältnis von 1:1 bis 1:40 als Schneid- oder Trennemulsion (-milch) angewendet werden.

In der Praxis wird das erfindungsgemäße Schneid- oder Trennmittel auf mindestens die in Kontakt mit dem Schnittgut stehenden Maschinenteile aufgebracht, um diese zu dekontaminieren. Die Mittel werden erfahrungsgemäß in Dosierungen von 1-20 g/kg Nahrungsmittel eingesetzt, wobei die Dosierung von der verwendeten Schneid- bzw. Trennvorrichtung und dem Schnittgut abhängig ist.

Die Schneid- und Trennmittel werden meistens auf die Schneid- bzw. Trennvorrichtungen aufgebracht, z.B. beim Brotschneiden auf Kreistellerscheibenschneidmaschinen aufgesprüht, mit denen z.B. Schnittbrot anschließend geschnitten wird. Erfindungsgemäß werden dabei Teile der Schneidvorrichtungen, z.B. Kreistellermesser, Band-Slicer (rotierende Bandsägen), elektrische der mechanische Messer oder Messervorrichtungen, elektrische oder mechanische Sägen oder Sägevorrichtungen, elektrische oder mechanische Kettensägen oder Vorrichtungen benetzt, so daß das Schneid- bzw. Trennmittel auf dem entsprechenden Maschinenteil sowie auch auf der durch das Schneiden oder Trennen entstandenen Oberfläche dekontaminierend bzw. mikrobizid wirken kann.

Die vorteilhafte Wirkung der erfindungsgemäßen Schneid- und Trennmittel äußert sich in einer verlängerten Haltbarkeit des Schnittgutes, z.B. von Schnittbrot. Sie beruht nicht zuletzt darauf, daß das Schneid- und Trennmittel die Oberfläche des Schnittgutes durchdringt und auch die tieferen Schichten des geschnittenen Nahrungsmittels dekontaminiert und zwar durch die im Schneidöl enthaltenen Aromastoffe.

Die hier beschriebenen Aromastoffe wirken darüber hinaus mikrobizid in der Dampfphase, da die meisten Aromastoffe leicht verdampfen. Sie wirken daher im sogenannten Umfeld des Nahrungsmittels, z.B. in der Verpackung des Nahrungsmittels, wenn dieses nach den Schneidprozeß z.B. in eine Folienverpackung verpackt wird.

Dieser Prozeß der Dekontamination des Schnittgutes nach dem eigentlichen Schneidvorgang kann durch eine schwache thermische Nachbehandlung des Nahrungsmittels ohne Qualitätsverlust desselben in der Verpackung unterstützt werden. So wird z.B. Brot nach dem Schneiden in Polyethylenfolien verpackt und anschließend z.B. mittels Mikrowelle innerhalb von 10 Sekunden bis 5 Minuten auf eine Kerntemperatur von zwischen 30 °C und 50 °C gebracht oder bis zu einer Stunde bei 30 °C bis 50 °C Kerntemperatur thermisch behandelt, wodurch der dekontaminierende Effekt des Schneid- bzw. Trennmittels verstärkt wird.

Der vorteilhafte Effekt der Schneid- bzw. Trennmittel kann z.T. erheblich erhöht werden, wenn die Auftrags- und Schneid- bzw. Trenntechniken so verbessert oder neu entwickelt werden, daß eine intensive Benetzung des Nahrungsmittels mit Schneid- bzw. Trennmittel erfolgt. So wurde z.B. in Versuchen zum Brotschneiden das Kreistellerschneidblatt mit separaten Nutführungen und Rillen versehen, so daß ein gründlicher und intensiver Auftrag von Schneid- bzw. Trennmittel möglich war.

### Die folgenden Beispiele erläutern die Erfindung.

### Vergleichsbeispiel

Im Stand der Technik ist bereits bekannt, daß Ethanol und Isopropanol in hohen Konzentrationen (75 Gew.-% bis mehr als 90 Gew.-%) mikrobizid sind. Additive mit einer derartig hohen Ethanol- oder Isopropanolkonzentration sind jedoch zum einen wegen der Gefahren bei ihrer Handhabung, insbesondere ihrer leichten Entflammbarkeit, zum anderen auch aus grundsätzlichen Erwägungen, z.B. im Hinblick auf ehemalige Alkoholiker oder Kinder, eher unerwünscht. Reduziert man jedoch die Ethanol- bzw. Isopropanolkonzentration auf 20 Gew.-%, bezogen auf das Prozeßhilfsmittel, oder weniger, so läßt sich keine bakterizide oder fungizide Wirkung mehr nachweisen, wie in der nachfolgenden Tabelle gezeigt wird.

**Tabelle Mikrobizide bzw. fungizide Wirkung von Ethanol und Isopropanol¹**

| | Staph. Aureus Einwirkzeit 1 Std. | Asp. Niger Einwirkzeit 1 Std. |
|---|---|---|
| Isopropanol 20 Ges.-% | RF² 0,3 | RF 0,5 |
| Ethanol 20 Gew.-% | RF 3,4 | RF 0 |
| | | |
| Wachstumskontrolle | log KBE³: 7,5 | log KBE: 5,4 |
| Isopropanol 75 Gew.-% | RF 7,0 | RF 5,4 |
| Ethanol 75 Ges.-% | RF 7,0 | RF 5,4 |
| | | |
| Wachstumskontrolle | log KBE: 7,0 | log KBE: 5,4 |

| | | |
|---|---|---|
| 1. Die Ergebnisse wurden mittels eines quantitativen Suspensionsversuches erhalten (siehe Kapitel "Material und Methoden", 3.2). 2. RF (Reduktionsfaktor): log Ausgangskeimzahl abzüglich log Anzahl überlebender Keime. 3. KBE: Koloniebildende Einheiten | | |

### Beispiele 1-5

Die Effektivität von Prozeßhilfsmitteln wurde in verschiedenen Versuchen getestet. Hierbei zeigt sich, daß diese eine Verbesserung der Haltbarkeit und der Stabilisierung überraschenderweise bewirken, wenn sie als Schneidmittel, als Sprühmittel, als Reinigungsmittel, als Trennmittel eingesetzt werden. Die Anzahl der verderbniserregenden Keime auf Schneidflächen, Transportflächen oder Schnittflächen konnte so stark reduziert werden. Gleichzeitig wurde die Haltbarkeit z.B. von Wurst um 30 % gegenüber einer herkömmlichen Konservierung verlängert.

Am Beispiel von Brot wird durch Besprühen von Brotlaiben und Scheiben des Brotes mit Schneidmittel durch Aufsprühen des Prozeßhilfsmittels auf die Flächen der Schneidmesser die Haltbarkeit signifikant verbessert.

Am Beispiel von Backwaren konnte nachgewiesen werden, daß beim Vernebeln eines Prozeßhilfsmittels der Gehalt an Schimmelpilzen pro m² Luft signifikant reduziert werden konnte. Die Haltbarkeit wurde ohne zusätzliche Zugabe von Konservierungsmitteln in dem Brot bzw. den Backwaren erheblich verbessert.

### Beispiel 1

Einsatz eines Prozeßhilfsmittels als Schneidmittel für Schneidmesser und als Sprühmittel für Transport- und Förderbänder in der Fleischerei.

### Verfahrensbeschreibung:

a)-c) untersucht die Keimzahl von Säurebildnem wie Lactobacillen. Zur Bestimmung dieser Keinzahl wurde die übliche Labortechnik als Verdünnungsreihe und Gußagar angewendet.
   Verwendeter Nährboden MRS agar (OXOID)
d) Zur Bestimmung der keimreduzierenden Wirkung auf der Oberfläche von Wurst wurde das Abklatschverfahren angewendet.
   Die Keimzahl wurde vorher, nach 10 Minuten Einwirkzeit (nach Besprühung mit HIQProSlice, eingetragene Marke der Schür in Process GmbH), nach Abkühlung und vor dem Verpacken bestimmt.
   Nährboden für Gesamtkeimzahl: RODAC mit TSA, TW 80 und Lecithin. Oberfläche: 25 cm²

### Probebeschreibung:

Als Untersuchungsobjekt wurde Rostbratwurst gewählt. Das Produkt hat eine Haltbarkeit von 2-3 Wochen.

### Rostbratwurst wird wie folgt produziert:

Fleisch und Fett werden im Cutter geschnitten und mit Zutaten vermischt. Nach Einfüllen in den Darm wird die Wurst bei 75 °C gebrüht. Nach Abkühlung werden die Produkte zu je 3 Stück vakuumverpackt.

| Probenr.: | Beschreibung Probe |
|---|---|
| 1 | Rostbratwurst Nullprobe |
| 2 | Nullprobe + ProSlice auf Außenhaut (1 g/1000 g Wurst) |
| 3 | Anlage mit ProSlice dekontaminiert |
| 4 | wie 3 + ProSlice auf Außenhaut (1 g/1000 g Wurst) |
| 5 | wie 3 + % ProSlice als Additiv |
| 6 | wie 5 + ProSlice auf Außenhaut (1g/1000 g Wurst) |
| 7 | wie 3 + 3 % ProSlice als Additiv |
| 8 | wie 7 + ProSlice auf Außenhaut (1g/1000 g Wurst) |

### Ergebnisse:

a) Die Haltbarkeit eines Produkts, wenn angewendet als Additiv.

**Keimzahl Lactobacillen /g**

| Probennr. | Tag 1 | Tag 7 | Tag 14 |
|---|---|---|---|
| 1 | 100 | 31.000 | 2.100.000 |
| 5 | 200 | 26.000 | 5.000.000 |
| 7 | 100 | 40.000 | 5.000.000 |

b) Die Haltbarkeit eines Produkts, wenn angewendet als Sprühmittel auf der Außenhaut des Produkts

**Keimzahl Lactobacillten/g**

| Probennr. | Tag 1 | Tag 7 | Tag 14 |
|---|---|---|---|
| 1 | 100 | 31.000 | 2.100.000 |
| 4 | < 100 | 2.700 | 450.000 |
| 6 | < 100 | 19.000 | 1.100.000 |
| 8 | < 100 | 18.000 | 1.200.000 |

c) Die Haltbarkeit eines Produkts, wenn angewendet als Sprühmittel auf Oberflächen direkt im Kontakt mit dem Produkt.

| Probennr. | Tag 1 | Tag 7 | Tag 14 |
|---|---|---|---|
| 1 | 100 | 31.000 | 2.100.000 |
| 3 | 200 | 5.500 | 900.000 |

d) Die Keimzahl nach Besprühung auf der Außenseite des Produkts. Vorher (Probe 1)

| Probennr. | Gesamtkeimzahl/2 | Gesamtkeimzahl/2 |
|---|---|---|
| | 5 cm² vorher | 5 cm² nach 10 Minuten |

| | | Einwirkzeit |
|---|---|---|
| 1 | 120 | 95 |
| 2 | 65 | Kein Wachstum |
| 4 | 110 | Kein Wachstum |
| 6 | Rasenwuchs | Kein Wachstum |
| 8 | 18 | Kein Wachstum |

### Kommentar zu:

a) Die Haltbarkeit eines Produkts, wenn angewendet als Additiv.
   Die Tabelle zeigt, daß das Zufügen von HIQProSlice auch in erheblichen Mengen keinen Einfluß auf die Haltbarkeitsverlängerung hat. Das HIQProSlice hat keine konservierende Wirkung, wenn es als Additiv zugefügt wird.
b) Die Haltbarkeit eines Produkts, wenn angewendet als Sprühmittel an der Außenseite des Produkts.
   Die Tabelle zeigt, daß durch das Besprühen der Wurst mit 1 g pro 1000 g Produkt sich eine Haltbarkeitsverbesserung ergibt.
c) Die Haltbarkeit eines Produkts, wenn angewendet als Sprühmittel auf Oberflächen direkt im Kontakt mit dem Produkt.
   Die Tabelle zeigt, daß durch das Besprühen der Oberflächen und Geräte sich eine Haltsbarkeitsverbesserung ergibt.
d) Die Keimzahl nach Besprühung auf der Außenseite des Produkts.
   Durch das Besprühen der Wurstoberfläche ergibt sich eine Keimzahlreduzierung von RF log von mindestens 2 innerhalb 10 Minuten.

### Beispiel 2

Technologische (Nach-)Wirkung von Prozeßhilfsmitteln zum Sprühen am Beispiel eines Sprühmittels/Schneidmittels zum Schneiden und Besprühen der Transportvorrichtungen bei der Produktion/Zerlegung von Geflügelfleisch.

Ergebnis der Prüfung von HIQ Pro Chick (1 %-ig) auf die Aufhebung eines bakteriziden/bakteriostatischen Effekts (syn. mikrobiologisch-technologische Nachwirkung) nach Kontakt mit Geflügelprotein in Anlehnung an die Methode B 4.2.3. BGA nach E. Petermann und G. Cemy.

| | |
|---|---|
| Untersuchungsmaterial: | 1 Muster HIQ Pro Chick-Konzentrat, eingetragene Marke der Firma Schür in Process GmbH, Mönchengladbach |
| Untersuchungsmethode: | B IV 42.3. BGA, Mikrobiologisches Meßverfahren; Agar-Diffusionstest |
| Durchführung: | Vom eingesandten Material wurde zunächst eine 1 %-ige Verdünnung in einem Lysat aus einem Hähnchenbrustfilet, Fa. Wiesenhof, HKL-A mit einem Proteingehalt von 30 g/l (Biurett-Methode) hergestellt. Diese Mischung wurde für 18 Std. bei 6 °C inkubiert. Am nächsten Tag wurde diese Mischung mit 10 µl, 50 µl und 100 µl in einen CASO-Agar mit pH 7,0 pipettiert, in den Sporen von Bacillus subtilis BGA-Stamm (DSM 614) eingegossen waren; Ansatz je 3 Vertiefungen. |
| | Nach einer 2-stündigen Vordiffusion bei 4 °C wurden die Platten mit den Bacillus-Sporen 3 Tage bei 30 °C bebrütet und auf Hemmhöfen kontrolliert. |
| | Als positive Kontrolle diente für den Bacillusstamm ein Antibiotikumplättchen - als Wachstumskontrolle wurde ein lediglich mit Sporen versetzter Agar benutzt. |
| | Zusätzlich wurde das HIQ Pro Chick in obigen Mengen sowohl als konzentrierte, 10 %-ige und 1 %-ige Lösung ohne Proteinkontakt auf Hemmwirkung gegen den Bacillus subtilis untersucht. Dieser Ansatz wurde an 2 verschiedenen Tagen durchgeführt. |
| Untersuchungsergebnis: | Positive Kontrolle: Hemmhof von 40 mm um das Antibiotikum |
| | Wachstumskontrolle: Gutes Wachstum von Bacillus subtilis BGA |
| Untersuchungsprobe: | 1 %-ges HIQ Pro Chick in Protein: Keine Hemmhöfe bei 10,50 und 100 µl Probenmenge. |
| | HIQ Pro Chick ohne Protein: Keine Hemmhöfe bei 10, 50 und 100 µl Probenmenge und 100 %-iger, 10 %-iger und 1 %-iger Lösung. |

### Beurteilung nach Methode B IV 4.2.3. BGA:

Gemäß dem hier eingesetzten Testverfahren nach BGA (BgVV) läßt sich für die Probe HIQ Pro Chick in allen Versuchsansätzen selbst in 10-facher Dosierung kein bakterizider oder bakteriostatischer Effekt, d.h. auch keine mikrobiologisch-technologische Nachwirkung mit Hühnermuskelfleisch -Ektrakt nachweisen.

### Beispiel 3

Prozeßhilfsmittel zum Besprühen von Schneidmessern als Schneidmittel und zum Besprühen von Transportvorrichtungen am Beispiel von Schnittwurst unter Berücksichtigung der Reduzierung von Verderbniserregem (Enterobacter/Lactobacilien) auf Schneidmessern, Transportvorrichtung und Wurstschnittflächen und Verbesserung/Verlängerung der Haltbarkeit.

### 2a. Standard-Verfahren

| Probennr.: | Probenbeschreibung | Befund Gesamtkeimzahl/7 cm² | Bemerkung |
|---|---|---|---|
| 1 | Band | 67 | |
| 2 | Band | ± 100 | |
| 3 | Band | ± 100 | |
| 4 | Band | 51 | 20 Schimmel |
| 5 | Wurstunterstützer | 8 | |
| 6 | Wurstunterstützer | 0 | |
| 7 | Messer (Außenseite) | 39 | |
| 8 | Messer (Innenseite) | 28 | |
| 9 | Messerkasten (Innenseite) | massenhaft | |

### 2b. Nach Behandlung von Schneid- und Transportflächen

| Probennr.: | Probenbeschreibung | Befund Gesamtkeimzahl/7 cm² |
|---|---|---|
| 18 | Band nach Einreiben mit Papier (13:12h) | 1 |
| 19 | Band nach Einreiben mit Papier (13:12h) | 0 |
| 20 | Band nach Einreiben mit Papier (13:22h) | 0 |
| 21 | Band nach Einreiben mit Papier (13:20h) | 1 |
| 22 | Band nach Einreiben mit Papier (13:30h) | 18 |
| 23 | Band nach Einreiben mit Papier (13:30h) | 4 |
| 24 | Band während der kontinuierlichen Besprühung | 0 |
| 25 | Band während der kontinuierlichen Besprühung | 0 |
| 26 | Geschnittene Wurst (oben) | 1 |
| 27 | Geschnittene Wurst (unten) | 0 |

### 2c. Haltbarkeitsüberprüfung verpackter Wurst

### Probenbezeichnung:

- V: = Probe vor der Behandlung
- M: = Probe nach dem Einreiben
- R: = Probe nach dem Besprühen ausschließlich nur des Bandes
- MB: = Probe während der kontinuierlichen Besprühung des Bandes und des Messers

| **Datum** | **Probe** | **GKZ** | **Entero** | **Lacto** | **Staph.** | **Hefe** | **SchiPi.** | **Sp.Bild** |
|---|---|---|---|---|---|---|---|---|
| Woche 1 | V | <10² | <10² | <10² | <10² | <10² | <10² | <10² |
| | M | <10² | <10² | <10² | <10² | <10² | <10² | <10² |
| | R | <10² | <10 | <10² | <10² | <10² | <10² | <10² |
| | MB | <10² | <10 | <10² | <10² | <10² | <10² | <10² |

| **Datum** | **Probe** | **GKZ** | **Entero** | **Lacto** | **Staph.** | **Hefe** | **SchiPi.** | **Sp.Bild** |
|---|---|---|---|---|---|---|---|---|
| Woche 2 | V | 7,2*10³ | <10 | >3*10⁶ | <10 | <10 | <10 | <10² |
| | M | 3,2*10² | <10 | 2*10² | <10 | <10 | <10 | <10² |
| | R | 1,4*10³ | <10 | 1.5*10³ | <10 | <10 | <10 | <10² |
| | MB | 1,8*10⁴ | <10 | 1,7*10⁴ | <10 | <10 | <10 | <10² |

| **Datum** | **Probe** | **GKZ** | **Entero** | **Lacto** | **Staph.** | **Hefe** | **SchiPi.** | **Sp.Bild** |
|---|---|---|---|---|---|---|---|---|
| Woche 3 | V | 4,2*10⁵ | 20 | 2,9*10⁸ | <10² | <10² | <10² | <10² |
| | M | 2,4*10⁴ | 60 | 6.3*10⁴ | <10² | <10² | <10² | <10² |
| | R | 6,3*10⁵ | 1,2*10⁴ | 3,0*10⁵ | <10² | <10² | <10² | <10² |
| | MB | 4.0*10⁵ | 90 | 6.0*10⁵ | -10² | <10² | <10² | <10² |

| **Datum** | **Probe** | **GKZ** | **Entero** | **Lacto** | **Staph.** | **Hefe** | **SchiPi.** | **Sp.Bild** |
|---|---|---|---|---|---|---|---|---|
| Woche 4 | V | 7.0*10⁷ | <10 | 2,9*10⁸ | <10² | <10² | <10² | <10² |
| | M | 8,*10⁷ | <10 | 6,3*10⁴ | <10² | 200 | <10² | <10² |
| | R | 1,8*10⁷ | <10 | 3,0*10⁵ | <10² | <10² | <10² | <10² |
| | MB | 10⁴ | <10 | 6,0*10⁵ | <10² | <10² | <10² | <10² |

| **Datum** | **Probe** | **GKZ** | **Entero** | **Lacto** | **Staph.** | **Hefe** | **SchiPi.** | **Sp.Bild** |
|---|---|---|---|---|---|---|---|---|
| Woche 5 | V | 3.5*10⁸ | <10 | 6,6*10⁸ | <10² | <10² | <10² | 10 |
| | M | 5,0*10⁵ | <10 | 7,0*10⁵ | <10² | 200 | <10² | 250 |
| | R | 10⁴ | <10 | 10⁵ | <10² | <10² | <10² | 50 |
| | MB | 2*10² | <10 | <10² | <10² | <10² | <10² | 30 |

### Resultat:

Bei der Produktion von Schnittwurst verlängert sich indirekt deren Haltbarkeit durch kontinuierliche Anwendung der Prozeßhilfsmittel auf Schneidmesser und Transportvorrichtung, da die Anzahl der auf den Vorrichtungen entstehenden Verderbniserregem erheblich reduziert wird.

Die Haltbarkeit von Wurst wird nach den besagten Versuchsergebnissen durch Einsatz des Schneidmittels, welches auf die Schneidvorrichtungen aufgebracht wird, signifikant verbessert. Zugleich kommt es zu einer überraschenden guten Reinigung der Schneidflächen, der Schneidvorrichtungen. Außerdem wird die Schneidfähigkeit der Wurst verbessert. Trotz der hohen Verdünnung der eingesetzten Stoffe wird die Haltbarkeit erheblich verbessert. Mit Pflanzenölen lassen sich hervorragende Resultate in Verdünnung von 1:10 bis 1:100 erreichen.

### Beispiel 4

Prozeßhilfsmittel zum Schneiden (Schneidöl) durch Besprühen auf Schneidmesser (Bandslicer), Kreistellerschneidmaschine und Sprühmittel zum Besprühen der Oberflächen des Nahrungsmittels am Beispiel von Toast-Brot unter Berücksichtigung der Reduzierung von Verderbniserregern auf den Maschinenteilen und Brot- und/oder Schnittflächen (Schimmelpilze/Aspergillus niger) zur gleichzeitigen Verbesserung/Venangerung der Haltbarkeit.

### 3a. Haltbarkeitsauswertung - Einsatz von Sprühmittel und Schneidöladditiv (genannt Jet und Cut)I

| **Probenkodierung** | **Proben anzahl** | **Anzahl Ausfälle in Tagen** | | | | | | | | | | | | | | | | | | | |
|---|---|---|---|---|---|---|---|---|---|---|---|---|---|---|---|---|---|---|---|---|---|
| | | **5** | **6** | **7** | **8** | **9** | **10** | **11** | **12** | **13** | **14** | **15** | **16** | **17** | **18** | **19** | **20** | **21** | **22** | **23** | **24** |
| V1 - 1,8 9 Jet / Toast | 70 | 0 | 0 | 0 | 0 | 0 | 0 | 0 | 0 | 0 | 0 | 0 | 0 | 0 | 0 | 0 | 0 | 0 | 0 | 0 | 2 |
| | | | | | | | | | | | | | | | | | | | GU | | GU |
| V2-1,0 g Jet / Toast | 70 | 0 | 0 | 0 | 0 | 0 | 0 | 0 | 0 | 0 | 0 | 0 | 0 | 0 | 0 | 0 | 0 | 0 | 0 | 1 | 3 |
| | | | | | | | | | | | | | | | | | | | | GV | GV |
| V3-0,6 g Jet / Toast | 70 | 0 | 0 | 0 | 0 | 0 | 0 | 0 | 0 | 0 | 0 | 0 | 0 | 0 | 0 | 0 | 0 | 0 | 0 | 2 | 1 |
| | | | | | | | | | | | | | | | | | | | | GU | GU |
| V4-nur Messer mit Cut | 70 | 0 | 0 | 0 | 0 | 0 | 0 | 0 | 0 | 0 | 0 | 0 | 0 | 0 | 0 | 0 | 0 | 1 | 2 | 4 | X |
| | | | | | | | | | | | | | | | | | | GV | GV | GV | |
| V5-Standard o. Past | 70 | 0 | 0 | 0 | 0 | 1 | 3 | 5 | 10 | 16 | X | | | | | | | | | | |
| | | | | | | GV | GV | GV | GV | GV | | | | | | | | | | | |
| V6 - Standard | 70 | 0 | 0 | 0 | 0 | 0 | 0 | 0 | 0 | 0 | 0 | 2 | 4 | 3 | 4 | 5 | 7 | X | | | |
| | | | | | | | | | | | | | | | | | | | | | |

| | | | | | | | | | | | | | | | | | | | | | |
|---|---|---|---|---|---|---|---|---|---|---|---|---|---|---|---|---|---|---|---|---|---|
| Legende: Schimmelfarbe: G=Grün, GE=Gelb, S=Schwarz, W=Weiß, K=Kreide Schimmeibefundstelle O=Oben, U=Unten, S=Seite, M=Schnittfläche V=Verschiedene Stellen | | | | | | | | | | | | | | | | | | | | | |

### 3b. Umfeldhygiene

| Probennr.: | Beschreibung | Zeit | Bakt./m³ | Schimmel |
|---|---|---|---|---|
| 1 | Eingang Bandslicer | 15:15h | 260 | 50 |
| 2 | Ausgang Slicer | 15:25h | 225 | 25 |
| 3 | Kühlturm Raummitte | 15:30h | 13 | < 13 |
| 4 | Verpackungsmaschine | 15:30h | 400 | 62 |
| 5 | CO²-Injektor | 15:40h | 750 | 88 |
| 6 | Verpackung | 16:00h | 63 | 25 |

### Resultat:

Bei der Produktion von Schnittbrot verlängert sich indirekt dessen Haltbarkeit durch kontinuierliche Anwendung der Prozeßhilfsmittel zum Sprühen auf Brotoberflächen und Schneiden des Brotes mit Schneidöl (Zusatz des Prozeßhilfsmittel - schneidölanteilig zum normalen Schneidöl), da die Anzahl der Schimmelpilze (Verderbniserreger) sich erheblich reduzieren. Eine chemische Konservierung oder Pasteurisierung ist nicht mehr notwenidg.

### Beispiel 5

Prozeßhilfsmittel zum Vernebeln in der Luft unter Berücksichtigung der Reduzierung der Verderbniserreger in der Luft (Schimmelpilz/Aspergillus niger) und Verhinderung der Resedimentierung auf Backwaren am Beispiel von Backwaren mit dem Resultat der Verbesserung/Verlängerung der Haltbarkeit.

### 4a. Luftkeimzahlmessungen vor der Behandlung

### Biotest-Airsampler, jeweils 2 Min. (80 ltr. Luft)

| Probennr.: | Probenbeschreibung | Bakterien | Schimmel |
|---|---|---|---|
| 1 | Kühlraum vor Ver-nebelung zwischen den Kühltürmen | 38 | |
| 2 | Treppenbereich vor Einlauf in den Kühlraum | 1.500 | |
| 3 | Ausgang Kühlraum zur Verpackung | 2.500 | 625 |
| 4 | 1.kühlturm vor dem Luftstrom der Kühl-anlage - vor Vemebelung 10:00h | 75 | 13 |
| 5 | 1.Kühlturm vor dem Luftstrom der Kühl-anlage direkt vor Vernebelung 11:30h | 80 | 140 |

### 4b. Luftkeimzahlmessungen während/nach der Behandlung

| Probennr.: | Probenbeschreibung | Bakterien | Schimmel |
|---|---|---|---|
| 6 | 1.Kühlturm vor dem Luftstrom der Kühl-anlage-während der Verebelung 11:45h | 15 | 13 |
| 7 | 1.Kühlturm vor dem Luftstrom der Kühl-anlage-am Ende der Vernebelung 13:00h | 0 | 0 |
| 8 | 1.Kühlturm vor dem Luftstrom der Kühl-anlage-nach der Ver-nebelung 14:00h | 0 | 0 |

### 4c. Haltbarkeitsauswertung nach Einsatz von Vemebelungsmittel (genannt FOG)

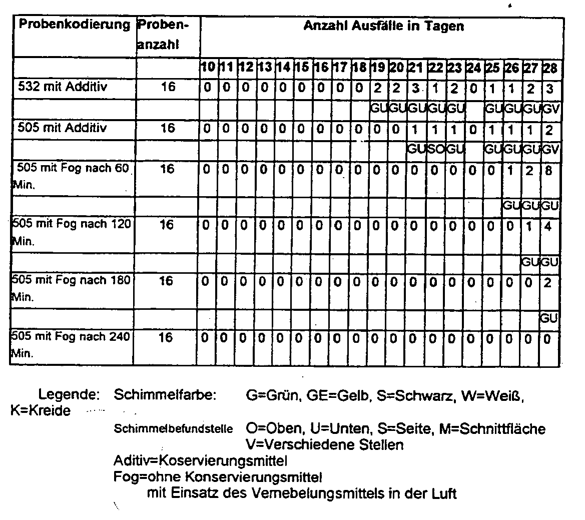

### Resultat:

Bei der Produktion von Backwaren verlängert sich indirekt dessen Haltbarkeit durch kontinuierliche Anwendung des Prozeßhilfsmittels zum Vernebeln in der Luft (Kühlturm, Kühl-/Transportstrecke), wobei sich die Anzahl der Schimmelpilze in der Luft erheblich reduziert. Eine chemische Konservierung oder Pasteurisierung der Backwaren ist nicht mehr notwendig.

### Beispiele 6 bis 17

In den nächsten Beispielen wurden folgende Materialien und Methoden eingesetzt:

### Material und Methoden:

| | | | |
|---|---|---|---|
| 1. | Testorganismen: | E.coli | ATCC11229 |
| | | Staph.aureus | ATCC6538 |
| | | Ps.aeruginosa | ATCC15442 |
| | | C.albicans | ATCC10231 |
| | | A.niger | ATCC16404 |
| | | Cladosporium herbarum (Eigenisolat) | |
| | | | |
| 2. | Nährböden: | CSA (Tryptone Soya Agar Oxoid CM 131) | |
| | | CSB (Tryptone Soya Broth Oxoid CM 129) | |
| | | YGC agar (Merck 16000) | |
| | | Tween 80 (Merck) | |

### 3. Durchführung der Tests

### 3.1. In-vivo-Test zur Bestimmung der Mindesthaltbarkeit

Die Pilze und Bakterien werden mit einem Swab (Wattetupfer) aufgenommen (mit drehenden Bewegungen uber die Bewegungen über die bewachsene Platte streichen) und gleichmaßig z.B. über die Schnittfläche einer geschnittenen Brotprobe gestrichen, so daß so daß eine Konzentration von 10³ - 10⁴ Sporen bzw. Mikroorganismen pro 100 cm² erreicht wird.

0,2-0,3 ml des Testmittels werden mit einem Aerosolsprays auf 100 cm² Schnittbrotfläche gesprüht. Die Testbrote werden in Plastikbeutel (Polyethylen oder Polypropylen) verpackt, die Plastikbeutel geschlossen und bei Zimmertemperatur im Licht aufbewahrt.

Das Wachstum von Mikroorganismen auf den kontaminierten Broten wird mit dem auf Kontrollbrot verglichen. Als Mindesthaltbarkeit gilt die Anzahl von Tagen, nach der erstmals mit bloßem Auge ein Wachstum von Mikroorganismen erkannt werden kann.

### 3.2. In-vitro-Test- Quantitatives Suspensionsverfahren gemäß DGHM I 2.3.1¹.

Übernachtkulturen (oder im Falle von z.B. A. niger und C. albicans 3 Tage Kulturen) werden in physiologischer Salzlösung (0,8%) suspendiert, bis die gewünschte Konzentration (10⁶ Pilze/ml bzw. 10⁸ Bakterien/ml)erreicht ist. Danach wird 1 ml der Suspension in 9 ml des Testmittels überimpft.

Für Keime wie Staph. aureus, Pseudomonas und E. coli wird eine Einwirkzeit von 5 min. bis 1 Stunde, für A. niger und C. albicans eine Einwirkzeit von 1,6 und 24 Stunden gewählt. Während der Einwirkzeit wird regelmäßig geschüttelt.

Nach Ablauf der Einwirkzeit wird eine Verdünnungsreihe der Testsuspensionen in CSB (Oxoid), enthaltend den o. die jeweils getesteten Aromastoff(e) inaktivierende Substanzen, angelegt. Zur Inaktivierung von Aldehyden wird beispielsweise 0,1 Gew.-% Histidin zugefügt, zur Inaktivierung von Phenolen 1 Gew.-% Tween 80^{R}, zur Inaktivierung von Alkoholen 0,2 Gew.-% Tween^{R} und zur Inaktivierung von Säuren, Estern u.a. 0,03 Gew.-% Lecithin. Bei Bakterien wird 1 ml von jeder Verdünnung mit CSA (Oxoid) übergossen, bei A. niger/C. albicans mit YGC Agar (Merck).

Nach 24-48 Stunden Bebrütung werden die Platten ausgewertet und der Abtötungsfaktor als Reduktionsfaktor (RF) im Verhältnis zu einer Wachstumskontrolle von 10⁵-10⁷ KBE/ml bestimmt.

Deutsche Gesellschaft für Hygiene und. Mikrobiolgie; Richtlinien für die Prüfung und Bewertung chemischer Desinfektionsverfahren. Zentralblatt für Bakteriologie, Mikrobiologie und Hygiene Reihe B, Band 172, Heft 6 (1981)

### 3.3 Gasohasen-Testverfahren

Das Gasphasen-Testverfahren dient der Bestimmung des Abtötungsfaktors bei Verwendung von gasphasenaktiver Prozeßhilfsmitteln.

Die Bestimmung wird in einer sogenannten zweifachen Petrischale durchgeführt. Auf eine absorbierende Oberfläche, z.B. Brot oder Harnstoff/Formaldehydschaumblöckchen (0,5 x 1 x 3 cm) werden 0,5 ml des gasphasenaktiven Mittels gegeben. Das Brot oder das Schaumblöckchen werden in ein Kompartiment einer unterteilten Petrischale gelegt.

In ein anderes Kompartiment der gleichen Petrischale wird eine mit ca. 10⁸ bis 10⁹ Keimen beimpfte Filterpapierscheibe (Durchmesser 13 mm) gelegt. Die Schale wird luftdicht verschlossen und 24 Stunden bei einer Temperatur von 30 °C bebrütet.

Im Anschluß an die Inkubation wird die Filterpapierscheibe in 9 ml CSB suspendiert und eine Verdünnungsreihe in CSB hergestellt. Die Röhrchen werden bei 30 °C bebrütet und ausgewertet. Der Abtötungsfaktor wird im Vergleich mit einer Kontrolle bestimmt.

### 3.4 Gasphasensuspensionsverfahren

Mit dem Gasphasensuspensionsverfahren wird eine erste Untersuchung aut bakterizide und/oder fungizide Eigenschaften durchgeführt.

Zur Durchführung des Verfahrens werden dem jeweiligen Testmikroorganismus entsprechende geschmolzene Nährböden mit 10⁵ bis 10⁶ Keimen pro ml beimpft. Die Nährböden werden in Petrischalen gegossen und abgekühlt.

80 µl des zu testenden Mittels (Additiv oder Prozeßhilfsmittel) werden auf eine Filterpapierscheibe (Durchmesser: 13 mm; Schleicher & Schüll, Artikel 601/2) aufgetragen, und vier der so präparierten Filter gleichmäßig auf der Oberfläche einer präparierten Petrischale verteilt. Anschließend werden die Platten 24 Stunden bei 37 °C inkubiert.
Nach der Inkubation wird die Größe des eventuell auftretenden Hemmbereiches bestimmt.

### 3.5 Konservierunastest

Der Konservierungstest wurde gemäß USP XXII/NF XVII, US Pharmacopeia, United States Pharmacopeial Convention, Rockville, MD 20852, bestimmt

### Beispiel 6: Synergistischer Effekt von gut wasserlöslichen Alkoholen, einem Aromaaldehyd und einem Aromaphenol

Mit dem Versuch, dessen Ergebnisse in der folgenden Tabelle dargestellt sind, werden die Einzelwirkungen von Ethanol, Isopropanol in Konzentrationen von 20 und 1 Gew.-% sowie die Kombinationswirkung von 0,2 Gew.-% Anisaldehyd und 0,04 Gew.-% Oreganumöl mit der synergistischen Wirkung der Kombination von Anisaldehyd, Oreganumöl und je einem der erwähnten wasserlöslichen Alkohole verglichen. Der Versuch wurde als quantitativer Suspensionsversuch durchgeführt.

| | **Reduktionsfaktoren** | |
|---|---|---|
| Einwirkzeit 1 Std. | A. niger | Staph. aureus |
| Anisaldehyd 0,2 Gew.-% . | 0 | 3,3 |
| Oreganumöl 0,04 Gew.-% | | |
| (Wirkstoffkombination 5E) | | |
| 20 Gew.-% Ethanol | 0 | 3,4 |
| 20 Gew.-% Isopropanol | 0,5 | 0,3 |
| 20 Ges.-% Ethanol + 5E . | 5,4 | 7,7 |
| 20 Ges.-% Isopropanol + 5E | 5,4 | 7,7 |
| 1 Gew.-% Ethanol | 0 | 0 |
| 1 Gew.-% Isopropanol | 0 | 0 |
| 1 Gew.-% Ethanol + 5E | 0,9 | 7,7 |
| 1 Gew.-% Isopropanol + 5E | 0,1 | 5,5 |
| Wachstumskontrolle | log KBE: 5,4 | log KBE: 7,7 |

Aus den Werten ergibt sich, daß eine 1 %-ige Lösung der hierin verwendeten Alkohole sowie die Wirkstoffkombination 5E alleine für Aspergillus niger völlig unwirksam sind; für Staphylokokkus aureus ist die Wirkstoffkombination 5E mäßig wirksam. Auch eine 20 %-ige Alkohollösung für sich hat auf Aspergillus niger so gut wie keinen mikrobiziden Effekt, während auf Staphylokokkus aureus nur die Ethanollösung mäßig mikrobizid wirkt. Eine Kombination von Ethanol oder Isopropanol mit der Wirkstoffkombination 5E führt jedoch bei Vorliegen einer 20 %-igen Alkohollösung zu fast ausnahmslos 100 %-igem mikrobiziden Effekt, während eine Kombination 1 %-iger Alkohollösungen mit der Wirkstoffkombination 5E bei Staphylokokkus aureus immerhin noch 70 bis 100 % Mikrobizidie aufweist

### Beispiel 7: Dekontaminierende bzw. mikrobizide Wirksamkeit von einzelnen Aromastoffen

Die dekontaminierende bzw. mikrobizide Wirksamkeit von Aromastoffen aus den Gruppen der Alkohole, Aldehyde und Phenole sowie unterschiedliche Kombinationen aus diesen Gruppen wurde wiederum mit dem quantitativen Suspensionsverfahren bestimmt
Die Ergebnisse sind in der folgenden Tabelle dargestellt

**Tabelle**

| | | Asp. niger Einwirkzeit 1h:6h h | | Staph. aureus Einwirkzeit 1 h |
|---|---|---|---|---|
| Einzelsubstanzen Aromastoffe (einzeln) | Ges.-% Aromastoff in H₂O | Reduktionsfaktor¹ (Ausgangskeimzahl in log KBE²/ ml: 5,5) | | Reduktionsf aktor (Ausgangskeimzahl in log KBE/ml: 7,9) |
| Gruppe 1: Alkohol | | | | |
| Anisalkohol | 1 % | 0,3 | 1,0 | 2,1 |
| Hydrozimtalkohol | 1 % | 0,3 | 3,2 | 7,9 |
| Isopropanol | 75 % | 5,5 | 5,5 | 7,9 |
| Isopropanol | 20 % | 0,5 | 1,5 | 0,3 |
| Isopropanol | 1 % | 0 | 0 | 0 |
| Ethanol | 75 % | 5,5 | 5,5 | 7,9 |
| Ethanol | 20 % | 0,5 | | 0,3 |
| Ethanol | 1 % | 0 | | 0 |
| Gruppe 11: Aldehyde | | | | |
| Anisaldehyd | 0,2 % | 0 | 4,2 | |
| Citronellal | 0,2 % | 0 | 2.1 | |
| Perillaldehyd | 0.2 % | 0 | 2,6 | |
| Gruppe III: Phenole | | | | |
| Oreganumöl | 0.04 % | 0 | 3,1 | 1,4 |
| Rosmarinextrakt | 0,04 | 0.2 | 0,2 | 1,6 |

### Beispiel 8: Einfluß des erfindungsgemäßen Schneid- und Trennmittels auf die Haltbarkeit von Brot

Die Haltbarkeit von Schnittbrot wurde untersucht a) bei mit herkömmlichen Schneidmitteln geschnittenem Brot, das nicht mit Mikroorganismen beiimpft wurde, und bei mit dem erfindungsgemäßen Schneidmittel geschnittenem Brot, das nach dem Schneiden artifiziell kontaminiert wurde.

| | | Haltbarkeit des Schnittbrotes in Tagen | | | | |
|---|---|---|---|---|---|---|
| Schneid-/Trennmittel | | Ges.-% bezogen auf das gebrauchsfertige Mittel | Kontrollbrot, Geschnittene Brotscheibe, unbehandelt 20°C | Cladosporium herbarum 5 x 10⁵ KBE/100 cm² Brot 20°C | A. niger 2x10⁴ KBE/100 cm² Brot 20°C | Staph. aureus 4x10⁴ KBE/100 cm² Brot 20°C |
| a) | Sojaöl | 99 % | 3 | 9 | 8 | 12 |
| | Anisaldehyd | 1 % | | | | |
| b) | Sojaöl | 97.4% | 3 | 7 | 6 | 10 |
| | Caprylcaprinsäure-triglycerid | 1 % | | | | |
| | Lecithin | 1 % | | | | |
| | Anisaldehyd | 0.15% | | | | |
| | Hydrozimtalkohol | 0,45 % | | | | |

### Beispiel 9: Vergleich des Einflusses von herkömmlichem Schneidmittel mit erfindungsgemäßem Schneidmittel auf die Haltbarkeit von Schnittbrot

Die Ergebnisse dieses vergleichenden Versuches sind in der folgendenTabelle wiedergegeben.

| | Haltbarkeit von Schnittbrot in Tagen | |
|---|---|---|
| Schneid-/Trennmittel gemäß Tabelle 6 | Kontrollbrot mit Schneidöl ohne erfindungsgemäßes Prozeßhilfsmittel geschnitten | Kontrollbrot mit Schneid-/Trennmittel gem. Tabelle 6 geschnitten |
| a | 3 | 11 |
| b | 3 | 8 |

### Beispiel 10: Verlängerung der Haltbarkeit von Schnittbrot durch schwache thermische Nachbehandlung des mit Schneid-Trennmittel geschnittenen Nahrungsmittels

Die folgende Tabelle gibt die Haltbarkeit von Schnittbrot wieder, das einmal mit herkömmlichem Schneidöl geschnitten worden ist, zum anderen mit Schneid-/ Trennmitteln gemäß Tabelle 6 geschnitten worden ist und keiner thermischen Nachbehandlung unterworfen wurde und anschließend solchem Brot, das mit erfindungsgemäßen Schneid-/Trennmitteln geschnitten worden ist und anschließend einer schwachen thermischen Nachbehandlung unterworfen wurde.

| | Haltbarkeit von Schnittbrot in Tagen | | | | |
|---|---|---|---|---|---|
| Tabelle 8 Schneid-/Trennmittel | Kontrollbrot mit Schneidöl ohne erfindungsgemäßes Prozeßhilfsmittel geschnitten | Kontrollbrot mit Schneid-/Trennmittel gem. Tabelle 6 geschnitten | Brot mit Schneid-/Trennmittel gem. Tabelle 6 geschnitten und thermisch nachbehandelt | | |
| | | | Einwirkzeit in s/min | Kerntemp. in °C | Halbarkeit in Tagen |
| a | 3 | 11 | 10s | 30°C | 12 |
| | | | 30s | 36°C | 13 |
| | | | 1 min. | 41°C | 15 |
| | | | 2 min. | 45°C | 17 |
| | | | 5 min. | 50°C | 20 |
| b | 3 | 12 | 10s | 30°C | 13 |
| | | | 30s | 36°C | 14 |
| | | | 1 min. | 41°C | 16 |
| | | | 2 min. | 45°C | 17 |
| | | | 5 min. | 50°C | 19 |

### Beispiel 11 - 17

Im folgenden werden beispielhafte Prozeßhilfsmittel vorgestellt:

| | |
|---|---|
| Beispiel: | 11 Schneidmittel |
| | 12 Wärme-Kälte-Übertragungsmittel |
| | 13 Emulgier-, Trenn-, Reinigungsmittel |
| | 14 Schmiermittel |
| | 15 Gasphasenaldives Mittel |
| | 16 Vernebelungsmittel |
| | 17 Sprühmittel |

Die Rezepturbeispiele bestehen beispielhaft aus einzelnen und/oder mehreren Aromafunktionsgruppen untereinander und/oder sind synergistisch kombiniert.

Die Prozeßhilfsmittel werden entweder unverdünnt angewendet oder nach einer Verdünnung mit Wasser und/oder lebensmittelzulässigen Lösemitteln und/oder Pflanzen-(Fett)Ölen und/oder Emulgatoren von 0,01 Gew.-% bis 99,99 Gew.-% angewendet, bevorzugt in einem Mischungsverhältnis von 1 : 1 bis 1 : 100.

Einige Anwendungsbeispiele für den Einsatz eines oder mehrerer Prozeßhilfsmittel zur Haltbarkeitsstabilisierung und/oder Verbesserung und/oder Umfeldbeaufschlagung bei z.B.:

| | Awendung Prozeßhilfsmittel | Beispiel Nr.: |
|---|---|---|
| Toastbrot | VeRNebelungsmittel | 16 |
| | Schneidmittel | 11 |
| | Sprühmittel | 17 |
| Feingebäck | Vemebelungsmittel | 16 |
| Schnittwurst | Schneidmittel | 11 |
| | Emulgier-, Trenn-, Reinigungsmittel | 13 |
| Bratwurst | Sprühmittel | 17 |
| Heizkessetwasser zur Schokoladenmassen-erwärmung | Wärme-, Kätte-, Obertragungsmittel | 12 |
| Förderband | Schmiermittel | 14 |
| Abfallbehälter | Gasphasenaktives Mittel | 15 |

Folgende Rezepturbeispiele 1 - 62 sind repräsentative Beispiele der AromaFunktionsgruppen einzeln oder mehrere untereinander und/oder synergistisch kombiniert

| Funktionsgruppe | Aroma FDA | Beispiel Ges.-% |
|---|---|---|
| Poliphenol-Alkohol-Säure | Gallotannin | 17 |
| | 2-phenylethanol | 65 |
| | Pentansäure | 18 |

## Patentansprüche

1. Verfahren zur Haltbarkeitsverbesserung und/oder Stabilisierung von mikrobiell verderblichen Produkten, bei dem vor, nach und während des Prozesses zur Herstellung, Verarbeitung oder Verpackung der Produkte deren Oberflächen und/oder deren Umgebung, insbesondere die Umgebungsluft und/oder die Oberflächen der unmittelbar oder mittelbar mit den Produkten in Kontakt kommenden Geräte oder sonstigen Materialien mit einem oder mehreren Prozesshilfsmitteln beaufschlagt werden,
wobei die Prozesshilfsmittel mikrobizide Zusammensetzungen sind, die einen mikrobizid wirkenden GRAS (Generally Recognized As Safe)-Aikohol gemäß der FEMA-GRAS-Flavour-Substances-Liste GRAS 3-16, Nr. 2001-3834 (Stand 1993) und weiterhin ein GRAS-Polyphenol und eine GRAS-Säure enthalten.

2. Verfahren gemäß Anspruch 1, wobei
(a) der GRAS-Alkohol ausgewählt ist aus Acetoin, Ethanol, 1-Propanol, 2-Propanol, Propylenglykol, Glycerin, Benzylalkohol, n-Butylalkohol; iso-Butylalkohol, Hexylalkohol, L-Menthol, Octylalkohol, 2-Phenylethanol, Zimtalkohol, 1-Phenylethanol, Heptylalkohol, 1-Pentanol, 3-Methyl-1-butanol, Anisalkohol, Citronelloi, n-Decanol, Geraniol, 3-Hexenol, 3-Phenyl-1-propanol, Laurylalkohol, Linalool, Nerolldol, 2,6-Nonadien-1-ol, Nonylalkohol, Rhodlnol, Terpineol, Borneol, Clineol, Anisol, Cuminylalkohol, 1-Phenyl-1-propanol, 10-Undecen-1-ol und 1-Hexadecanol; und/oder
(b) die GRAS-Säuren ausgewählt sind aus Essigsäure, Aconitsäure, Adipinsäure, Ameisensäure, Apfelsäure, Capronsäure, 3-Phenyl-1-propionsäure, Nonansäure, Milchsäure, Phenoxyessigsäure, Phenylessigsäure, Valeriansäure, iso-Valeriansäure, Zimtsäure, Citronensäure, Mandelsäure, Weinsäure, Fumarsäure, Tanninsäure und/oder deren physiologisch verträglichen Salze.

3. Verfahren nach Anspruch 1 oder 2, wobei die Zusammensetzung weiterhin GRAS-Acetate, insbesondere ausgewählt aus !so-Amylacetat, Benzylacetat, Benzylphenylacetat, n-Butylacetat, Cinnamylacetat, Citronenllylacetat, Ethylacetat, Eugenolacetat, Geranylacetat, Hexylacetat, Hydrocinnamylacetat,
Linalylacetat, Octylacetat, Phenylethylacetat, Terplnylacetat, Triacetin, Kaliumacetat, Natriumacetat und Calciumacetat; und/oder GRAS-Terpene, insbesondere ausgewählt aus Campher, Limonen und Caryophyllen; und/oder
GRAS-Acetale ausgewählt aus Acetal, Acetaldehyddibutylacetal, Acetaldehyddipropylacetal, Acetaldehydphenethylpropylacetal, Zimtalde-hydethylenglycolacetal, Decanaldimethylacetal, Heptanaldimethylacetal, Heptanalglycerylacetal und Benzaldehydpropylenglykolacetal; und/oder etherische Öle und Pflanzenextrakte; und/oder
GRAS-Aldehyde ausgewählt aus Acetaldehyd, Anisaldehyd, Benzaldehyd, Methyl-1-propanal, Citral, Citronellal, n-Decanal, Ethylvanillin, Fufural, Helioptropin, Heptanal, Hexanal, 2-Hexenal, 3-Phenyl-1-propanal, Dodecanal, Nonylaldehyd, Octylaldehyd, Phenylacetaldehyd, Propanal, Vanillin, Zimtaldehyd, Perillaaldehyd und Cuminaldehyd; und/oder
GRAS-Phenole ausgewählt aus Thymol, Methyleugenol, Acetyleugenol, Safrol, Eugenol, Isoeugenol, Anethol, Phenol, Methylchavicol, Carvacrol, α-Bisabolol, Fornesol, Anisol und Propenylguaethol
enthält.

4. Verfahren nach einem der Ansprüche 1 bis 3, wobei das Prozesshilfsmittel eine mikrobzide Wirkungszeit von weniger als 24 h, vorzugsweise weniger als 12 h aufweist.

5. Verfahren nach Anspruch 4, wobei die mikrobizide Wirkungszeit der Prozesshilfsmittel unter 1 h, vorzugsweise unter 15 min liegt.

6. Verfahren nach einem oder mehreren der Ansprüche 1 bis 5, wobei die Beaufschlagung mit dem Prozesshilfsmittel zum Zwecke des Aufstreichens, Schmierens, Emulgierens, Trennens, Reinigens, Sprühens, Vemebelns, Vergasens und Schneidens erfolgt.

7. Verfahren nach einem oder mehreren der Ansprüche 1 bis 6, wobei das Prozesshilfsmittel weniger als 50 Gew.-%, vorzugsweise weniger als 30 Gew.-%, besonders bevorzugt weniger als 20 Gew.-% Isopropanol enthält.

8. Verwendung eines Prozesshilfsmittels, wie in den Ansprüchen 1 bis 7 definiert, zum Beaufschlagen von Oberflächen mikrobiell verderblicher Produkte und/oder deren Umgebung zum Zwecke des Aufstreichens, Schmierens, Emulgierens, Trennens, Reinigens, Sprühens, Vernebelns, Vergasens und Schneidens.

## Claims

1. A process for the improvement of the keeping quality and/or stabilization of microbially perishable products, wherein the surfaces of the products and/or their environment, especially the ambient air and/or the surfaces of the equipment or other materials immediately or mediately contacting the products or other materials, are treated with one or more processing aids prior to, during or after the process for the manufacturing, processing or packaging of the products, wherein said processing aids are microbicidal compositions containing a microbicidally active GRAS (generally recognized as safe) alcohol according to the FEMA GRAS Flavouring Substances List GRAS 3-16 Nos. 2001-3834 (as of 1993), and further a GRAS polyphenol and a GRAS acid.

2. The process according to claim 1, wherein
(a) said GRAS alcohol is selected from acetoin, ethanol, 1-propanol, 2-propanol, propylene glycol, glycerol, benzyl alcohol, n-butyl alcohol, isobutyl alcohol, hexyl alcohol, L-menthol, octyl alcohol, 2-phenyl ethanol, cinnamyl alcohol, 1-phenyl ethanol, heptyl alcohol, 1-pentanol, 3-methyl-1-butanol, anisic alcohol, citronellol, n-decanol, geraniol, 3-hexenol, 3-phenyl-1-propanol, lauryl alcohol, linalool, nerolidol, 2,6-nonadiene-l-ol, nonyl alcohol, rhodinol, terpineol, borneol, clineol, anisol, cuminyl alcohol, 1-phenyl-1-propanol, 10-undecene-1-ol, and 1-hexadecanol; and/or
(b) said GRAS acids are selected from acetic acid, aconitic acid, adipic acid, formic acid, malic acid, capronic acid, 3-phenyl-1-propionic acid, nonanoic acid, lactic acid, phenoxyacetic acid, phenylacetic acid, valeric acid, iso-valeric acid, cinnamic acid, citric acid, mandelic acid, tartaric acid, fumaric acid, tannic acid, and/or their physiologically acceptable salts.

3. The process according to claim 1 or 2, wherein said composition further contains GRAS acetates, especially those selected from iso-amyl acetate, benzyl acetate, benzylphenyl acetate, n-butyl acetate, cinnamyl acetate, citronellyl acetate, ethyl acetate, eugenol acetate, geranyl acetate, hexyl acetate, hydrocinnamyl acetate, linalyl acetate, octyl acetate, phenylethyl acetate, terpinyl acetate, triacetin, potassium acetate, sodium acetate, and calcium acetate; and/or
GRAS terpenes, especially those selected from camphor, limonene, and ß-caryophyllene; and/or
GRAS acetals, especially those selected from acetal, acetaldehyde dibutyl acetal, acetaldehyde dipropyl acetal, acetaldehyde phenethyl propyl acetal, cinnamic aldehyde ethylene glycol acetal, decanal dimethyl acetal, heptanal dimethyl acetal, heptanal glyceryl acetal, and benzaldehyde propylene glycol acetal; and/or
essential oils and plant extracts; and/or
GRAS aldehydes selected from acetaldehyde, anisic aldehyde, benzaldehyde, methyl-1-propanal, citral, citronellal, n-decanal, ethylvanillin, furfural, heliotropin, heptanal, hexanal, 2-hexenal, 3-phenyl-1-propanal, dodecanal, nonyl aldehyde, octyl aldehyde, phenylacetaldehyde, propanal, vanillin, cinnamic aldehyde, perillaldehyde, and cuminaldehyde; and/or
GRAS phenols selected from thymol, methyleugenol, acetyleugenol, safrol, eugenol, isoeugenol, anethole, phenol, methylchavicol, carvacrol, α-bisabolol, fornesol, anisole, and propenylguaethol.

4. The process according to any of claims 1 to 3, wherein said processing aid has a microbicidal activity period of less than 24 hours, preferably less than 12 hours.

5. The process according to claim 4, wherein the microbicidal activity period of said processing aids is below 1 hour, preferably below 15 minutes.

6. The process according to one or more of claims 1 to 5, wherein said treating with said processing aid is intended for brushing, spreading, emulsifying, separating, cleaning, spraying, nebulizing, volatizing and cutting.

7. The process according to one or more of claims 1 to 6, wherein said processing aid contains less than 50% by weight, preferably less than 30% by weight, more preferably less than 20% by weight, of isopropanol.

8. Use of a processing aid as defined in claims 1 to 7 for treating the surfaces of microbially perishable products and/or their environment for brushing, spreading, emulsifying, separating, cleaning, spraying, nebulizing, volatizing and cutting.

## Revendications

1. Procédé pour améliorer la conservation et/ou la stabilisation de produits corruptibles par des microbes, dans lequel avant, après et pendant le procédé de fabrication, de traitement ou de conditionnement des produits, leurs surfaces et/ou leur environnement, en particulier l'air ambiant et/ou les surfaces des appareils ou d'autres matériaux venant directement ou indirectement en contact avec les produits, sont traités à l'aide d'un ou de plusieurs auxiliaires de traitement,
dans lequel les auxiliaires de traitement sont des compositions microbicides qui contiennent un alcool désigné GRAS (Generally Recognized As Safe, ou "généralement reconnu comme sûr") à action microbicide selon la liste des substances et arômes FEMA/GRAS 3-16, n° 2001-3834 (état de 1993) et en outre un polyphénol désigné GRAS et un acide désigné GRAS.

2. Procédé selon la revendication 1, dans lequel
(a) l'alcool désigné GRAS est sélectionné parmi l'acétoïne, l'éthanol, le 1-propanol, le 2-propanol, le propylèneglycol, la glycérine, l'alcool de benzyle, l'alcool de n-butyle, l'alcool d'isobutyle, l'alcool d'hexyle, le L-menthol, l'alcool d'octyle, le 2-phényléthanol, l'alcool cinnamique, le 1-phényléthanol, l'alcool d'heptyle, le 1-pentanol, le 3-méthyl-1-butanol, l'alcool d'anis, le citronellol, le n-décanol, le géraniol, le 3-héxénol, le 3-phényl-1-propanol, l'alcool de lauryle, le linalol, le nérolidol, le 2,6-nonadién-1-ol, l'alcool de nonyle, le rhodinol, le terpinéol, le bornéol, le clinéol, l'anisol, l'alcool de cuminyle, le 1-phényl-1-propanol, le 10-undécén-1-ol et le 1-hexadécanol ; et/ou
(b) les acides désignés GRAS sont sélectionnés parmi l'acide acétique, l'acide aconitique, l'acide adipique, l'acide formique, l'acide malique, l'acide caproïque, l'acide 3-phényl-1-propionique, l'acide nonanique, l'acide lactique, l'acide phénoxyacétique, l'acide phénylacétique, l'acide valérique, l'acide iso-valérique, l'acide cinnamique, l'acide citrique, l'acide mandélique, l'acide tartrique, l'acide fumarique, l'acide tannique et/ou leurs sels physiologiquement compatibles.

3. Procédé selon la revendication 1 ou 2, dans lequel la composition contient en outre des acétates désignés GRAS, en particulier sélectionnés parmi l'acétate d'isoamyle, l'acétate de benzyle, l'acétate de benzylphényle, l'acétate de n-butyle, l'acétate de cinammyle, l'acétate de citronellyle, l'acétate d'éthyle, l'acétate d'eugénol, l'acétate de géranyle, l'acétate d'hexyle, l'acétate d'hydrocinnamyle, l'acétate de linalyle, l'acétate d'octyle, l'acétate de phényléthyle, l'acétate de terpinyle, la triacétine, l'acétate de potassium, l'acétate de sodium, l'acétate de calcium ; et/ou des terpènes désignés GRAS, sélectionnés en particulier parmi le camphre, le limonène et le β-caryophyllène ; et/ou
des acétals désignés GRAS, sélectionnés parmi l'acétal, le dibutylacétal d'acétaldéhyde, le dipropylacétal d'acétaldéhyde, le phénéthylpropylacétal d'acétaldéhyde, l'éthylèneglycolacétal d'aldéhyde cinnamique, le diméthylacétal de décanal, le diméthylacétal d'heptanal, le glycérylacétal d'heptanal, et le propylèneglycolacétal de benzaldéhyde ; et/ou des huiles éthérées et des extraits de plantes ; et/ou
des aldéhydes désignés GRAS sélectionnés parmi l'acétaldéhyde, l'anisaldéhyde, le benzaldéhyde, le méthyl-1-propanal, le citral, le citronellal, le n-décanal, l'éthylvanilline, le fufural, l'héliotropine, l'heptanal, l'hexanal, le 2-hexénal, le 3-phényl-1-propanal, le dodécanal, le nonylaldéhyde, l'octylaldéhyde, le phénylacétaldéhyde, le propanal, la vanilline, l'aldéhyde cinnamique, le périllaldéhyde et le cuminaldéhyde ; et/ou
des phénols désignés GRAS sélectionnés parmi le thymol, le méthyleugénol, l'acétyleugénol, le safrol, l'eugénol, l'isoeugénol, l'anéthol, le phénol, le méthylchavicol, le carvacrol, l'α-bisabolol, le fornésol, l'anisol et le propénylguaéthol.

4. Procédé selon l'une des revendications 1 à 3, dans lequel l'auxiliaire de traitement présente une durée d'action microbicide inférieure à 24 h, de préférence inférieure à 12 h.

5. Procédé selon la revendication 4, dans lequel la durée d'action microbicide de l'auxiliaire de traitement est inférieure à 1 h, de préférence inférieure à 15 min.

6. Procédé selon une ou plusieurs des revendications 1 à 5, dans lequel la charge avec l'auxiliaire de traitement se fait à des fins d'enduction, de lubrification, d'émulsionnement, de séparation, de nettoyage, de pulvérisation, de nébulisation, de gazage ou de sectionnement.

7. Procédé selon une ou plusieurs des revendications 1 à 6, dans lequel l'auxiliaire de traitement contient moins de 50 % en poids, de préférence moins de 30 % en poids, de façon particulièrement préférée moins de 20 % en poids d'isopropanol.

8. Utilisation d'un auxiliaire de traitement tel que défini dans les revendications 1 à 7 pour traiter des surfaces de produits corruptibles par des microbes et/ou leur environnement à des fins d'enduction, de lubrification, d'émulsionnement, de séparation, de nettoyage, de pulvérisation, de nébulisation, de gazage ou de sectionnement.
